# FASCICULE DE BREVET EUROPEEN

(11) **EP 3 514 424 B1**
(45) Date de publication et mention de la délivrance du brevet: **18.11.2020**
(21) Numéro de dépôt: 19151877.8
(22) Date de dépôt: 15.01.2019
(51) Int. Cl.: F16K 31/08, F16K 31/06, F16K 31/40

(54) **ÉLECTROVANNE BISTABLE DE CONFIGURATION TUBULAIRE AVEC ENTRÉE ET SORTIE EN LIGNE**
BISTABILES ELEKTROMAGNETVENTIL MIT RÖHRENFÖRMIGER KONFIGURATION MIT AXIAL FLUCHTENDEM EIN- UND AUSGANG
BISTABLE SOLENOID VALVE FOR TUBULAR CONFIGURATION WITH AXIALLY ALIGNED IN- AND OUTLET

(30) Priorité: 17.01.2018 FR 1850371
(43) Date de publication de la demande: 24.07.2019
(73) Titulaire: Delabie, 80130 Friville Escarbotin (FR)
(72) Inventeur: NADAUD, Grégoire, 80490 SOREL EN VIMEU (FR)
(74) Mandataire: Cabinet Chaillot

(56) Documents cités:
- EP-A1- 3 086 334
- WO-A1-2004/113714
- WO-A1-2016/132298
- DE-A1- 3 730 381
- DE-A1- 4 415 068
- DE-B- 1 089 605
- US-A1- 2017 067 572
- US-B1- 6 994 308

## Description

### Domaine technique

La présente invention est relative à une électrovanne bistable adaptable à l'intérieur d'une robinetterie.

### Arrière-plan technologique

On connait des robinets comportant une électrovanne pour fluide, avec entrée en ligne et sortie latérale, d'autres avec entrée latérale et sortie axiale dans lesquelles un électroaimant est disposé-orthogonalement à l'entrée et/ou à la sortie.

Une telle électrovanne présente un clapet mobile entre une position ouverte permettant le passage du fluide au travers de l'électrovanne et une position fermée obstruant le passage du fluide au travers de l'électrovanne. L'électrovanne comporte un bobinage permettant, lorsqu'il est alimenté, de déplacer le clapet de sa position fermée à sa position ouverte.

Pour les électrovannes bistables qui sont actionnées par une impulsion brève et de faible puissance, un aimant permanent permet de maintenir le clapet dans une position, par exemple ouverte, et un ressort dans l'autre position, par exemple fermée. Ces électrovannes ont pour inconvénient de travailler sur un équilibre incertain entre la force d'un aimant, la force d'un ressort et la force exercée par la pression du fluide transporté.

Compte tenu des variations de mises en œuvre des éléments générant ces efforts, ainsi que de la dynamique du système, des disfonctionnements peuvent être constatés. Par exemple, lors de la fermeture de l'électrovanne, le clapet peut rebondir et donc laisser l'électrovanne ouverte.

Ces risques de disfonctionnement engendrent donc une fabrication compliquée et/ou une surconsommation électrique amenant à un encombrement surdimensionné pour répondre au besoin.

Comme dit plus haut, les électrovannes ont généralement pour configuration un électroaimant orthogonal à l'entrée et/ou à la sortie de fluide ce qui leur donne un encombrement incompatible avec leur insertion à l'intérieur d'un corps de robinet mince comme le demandent les nouveaux codes esthétiques et les boîtiers d'encastrement.

La demande de brevet européen EP3086334A1 divulgue une électrovanne bistable pour un système de fluide, comprenant un dispositif à aimant permanent destiné à former un premier champ magnétique permanent traversant une culasse magnétique, un premier noyau et une armature, et un second champ magnétique permanent traversant la culasse magnétique, un second noyau et l'armature, l'armature étant bistable. En outre, la demande de brevet américain US2017/067572A1 divulgue une électrovanne bistable comprenant un boîtier dans lequel sont définis une chambre présentant des première et seconde ouvertures et un clapet principal, un clapet auxiliaire étant monté mobile entre le clapet principal et ladite seconde ouverture, un aimant permanent étant intégré au clapet auxiliaire et un solénoïde de commande étant disposé autour du clapet principal et du clapet auxiliaire et étant conçu pour générer un flux magnétique tendant à provoquer l'attraction du clapet principal et du clapet auxiliaire vers l'une ou l'autre desdites première et seconde ouvertures. Cependant, aucune de ces électrovannes bistables ne possède à la fois une consommation énergétique réduite et des positions d'ouverture et de fermeture de clapet stables et fiables.

### Résumé

Une idée à la base de l'invention est de fournir une électrovanne à consommation énergétique réduite. Ainsi, une idée à la base de l'invention est de limiter le temps d'impulsion et la puissance du courant d'alimentation de l'électrovanne nécessaire à l'ouverture de l'électrovanne et au maintien en position ouverte du clapet. Une idée à la base de l'invention est également de présenter une électrovanne dont les positions d'ouverture et de fermeture du clapet sont stables et fiables.

Par ailleurs, une idée à la base de l'invention est de fournir une électrovanne peu encombrante.

La présente invention a donc pour objet une électrovanne pour fluide du type bistable telle que définie à la revendication 1.

L'invention fournit une électrovanne pour fluide du type bistable avec un clapet principal ainsi qu'un clapet auxiliaire actionné par le noyau d'un électroaimant, ladite électrovanne présentant un axe longitudinal est caractérisée en ce que l'entrée de fluide, la sortie de fluide et l'électroaimant commandant le clapet auxiliaire sont alignés selon l'axe longitudinal de l'électrovanne.

Grâce à ces caractéristiques l'électrovanne présente un encombrement réduit et ne nécessite pas d'organe de liaison connecté sur une face latérale de l'électrovanne. Ainsi, il est possible d'insérer l'électrovanne dans un espace réduit tel qu'un corps de robinet tubulaire.

Selon des modes de réalisation, une telle électrovanne peut comporter une ou plusieurs des caractéristiques suivantes.

Selon un mode de réalisation, l'électroaimant comporte une carcasse en deux parties en tôle emboutie, emboîtées, en une matière ferromagnétique, la dite carcasse formant un logement, une paroi inférieure de la carcasse formant un fond du logement et présentant un orifice axial traversant et une paroi supérieure de la carcasse formant un plafond du logement, et, à l'intérieur de cette carcasse, un bobinage supérieur et un bobinage inférieur montés en série, un aimant permanent étant intercalé entre le bobinage inférieur et le bobinage supérieur.

Selon un mode de réalisation, l'électroaimant comporte un moyeu avec des cloisons radiales délimitant des logements pour le bobinage supérieur, le bobinage inférieur et l'aimant permanent est de préférence en forme de croissant, ledit aimant permanent étant intercalé entre les deux bobinages dans les alvéoles de la cloison centrale du moyeu, et ledit moyeu présentant un alésage central contenant un noyau creux.

Selon un mode de réalisation, ledit aimant permanent est disposé perpendiculairement à l'axe d'un noyau coulissant dans l'alésage central du moyeu, de manière à ce que la périphérie de cet aimant permanent soit en contact avec la paroi interne de la carcasse dans laquelle est logé le moyeu et que le rayon intérieur dudit aimant soit au plus près du noyau, ledit aimant permanent étant composé d'un ou plusieurs secteurs magnétisés radialement par rapport à l'axe du noyau afin de générer deux flux magnétiques, un premier flux magnétique montant et un deuxième flux magnétique descendant.

Selon un mode de réalisation, le noyau de l'électroaimant comporte un corps de noyau creux et une tige de clapet à l'intérieur de ce corps de noyau, l'extrémité inférieure de la tige de clapet portant le clapet auxiliaire, ledit noyau étant logé dans l'alésage central du moyeu de sorte que la tige de clapet auxiliaire traverse l'orifice du fond inférieur de la carcasse, le noyau étant monté coulissant dans l'alésage central du moyeu entre, d'une part, une position haute dans laquelle le noyau est en appui contre le plafond du logement de la carcasse et le clapet auxiliaire étant alors dans une position permettant la circulation de fluide au travers de l'électrovanne et, d'autre part, une position basse dans laquelle le noyau est en appui sur le fond inférieur du logement et le clapet auxiliaire étant alors dans une position bloquant la circulation de fluide au travers de l'électrovanne, le bobinage supérieur et le bobinage inférieur étant aptes à déplacer le noyau dans l'alésage depuis la position haute vers la position basse et inversement en réponse à une brève alimentation des dits bobinages supérieur et inférieur.

Selon un mode de réalisation, l'aimant permanent comporte des pôles agencés radialement par rapport au noyau de manière à ce que, d'une part, le premier flux magnétique soit apte à maintenir le noyau dans une position correspondant à une position ouverte d'un clapet auxiliaire et dans laquelle le premier flux magnétique reboucle par contact du noyau avec un bouchon circulaire inséré au sommet de la bobine et la partie supérieure de la carcasse et, d'autre part, que le deuxième flux magnétique soit apte à maintenir le noyau dans une position correspondant à une position fermée du clapet auxiliaire et dans laquelle le deuxième flux magnétique reboucle par contact du noyau avec la partie inférieure de la carcasse lorsque l'alimentation des bobinages supérieur et inférieur est coupée, un évasement étant ménagé dans la partie supérieure du moyeu pour recevoir une collerette sommitale du noyau et le bouchon circulaire qui est rendu immobile par contact avec la partie supérieure de la carcasse.

Grâce à ces caractéristiques, la position ouverte ou fermée du clapet auxiliaire est obtenue de façon simple et fiable. En particulier, l'alimentation de la bobine ne sert qu'à déplacer le noyau portant la tige de clapet auxiliaire, l'aimant permettant de maintenir le clapet auxiliaire en position ouverte ou fermée sans consommation d'énergie. Par ailleurs, le déplacement du clapet auxiliaire sous l'effet combiné du deuxième flux magnétique et des bobinages permet une fermeture du clapet de façon fiable et stable, sans risque de rebond.

Un ressort de rappel est placé dans le noyau en appui sur la tige de clapet de façon à maintenir ledit clapet sur le siège auxiliaire lorsque l'électrovanne est au repos, et ce quelle que soit la pression du fluide.

Par ailleurs, le positionnement de l'aimant entre les bobinages supérieur et inférieur permet de positionner ledit aimant au plus proche du noyau, de sorte que le premier flux magnétique et le deuxième flux magnétique soient plus performants pour assurer le maintien en position du noyau.

Selon un mode de réalisation, l'électrovanne comporte un premier joint d'étanchéité agencé entre le moyeu et le fond du logement et un deuxième joint d'étanchéité agencé entre le plafond du logement et le moyeu.

Grâce à ces caractéristiques, le bobinage supérieur et le bobinage inférieur sont séparés de manière étanche du fluide pouvant circuler au niveau du clapet auxiliaire et de l'alésage central du moyeu.

Selon un mode de réalisation, le moyeu comporte en outre un bouchon d'étanchéité intercalé entre le plafond de la carcasse et le noyau, le deuxième joint d'étanchéité étant agencé entre le moyeu et le bouchon d'étanchéité de manière à séparer de manière étanche le plafond du logement de l'alésage central du moyeu, le bouchon d'étanchéité étant intercalé entre le noyau et le plafond de la carcasse de sorte que le noyau est indirectement en appui contre le plafond de la carcasse en position haute dudit noyau.

Grâce à ces caractéristiques, le plafond est séparé de manière étanche du fluide pouvant circuler au niveau du clapet auxiliaire et de l'alésage central du moyeu. Ainsi, le matériau choisi pour la réalisation des deux parties supérieure et inférieure de la carcasse peut être sélectionné pour ses propriétés magnétiques, sans tenir compte de ses caractéristiques comportementales au contact du fluide.

Selon un mode de réalisation, l'aimant permanent est agencé perpendiculairement à l'axe de coulissement du noyau et le dit aimant est polarisé selon une direction orthogonale à l'axe du noyau de manière à ce que, lorsque l'alimentation des bobinages supérieur et inférieur est coupée, les premier et deuxième flux magnétiques de l'aimant permanent séparent l'alésage central du moyeu en une zone d'attraction haute dans laquelle le noyau est repoussé vers sa position haute et une zone d'attraction basse dans laquelle le noyau est repoussé vers sa position basse.

Grâce à ces caractéristiques, le flux généré par les bobinages permet de contrer l'un des deux flux magnétiques générés par l'aimant permanent, cela en fonction du sens du courant parcourant les bobinages, et de renforcer le second flux magnétique généré par l'aimant permanent. Cela permet donc de déplacer le noyau au choix vers le haut ou vers le bas.

La tige de clapet portant à son extrémité inférieure le clapet auxiliaire présente à son extrémité supérieure un rebord annulaire logé dans l'alésage du noyau, ledit alésage présentant un épaulement en regard du rebord annulaire de la tige de clapet, le dit épaulement étant configuré pour que le noyau puisse entraîner verticalement la tige de clapet en déplacement lors de la commande d'ouverture de l'électrovanne, un organe de rappel tel qu'un ressort étant logé dans l'alésage pour repousser la tige de clapet lors de la commande de fermeture de l'électrovanne, un jeu séparant le rebord annulaire de l'épaulement lorsque l'électrovanne est en position fermée.

Grâce à ces caractéristiques, le maintien en position haute du noyau permet le maintien du clapet auxiliaire en position ouverte au moyen du seul aimant permanent. Par ailleurs, ces caractéristiques permettent de dissocier le maintien du noyau en position basse du maintien du clapet auxiliaire contre le siège auxiliaire. Ainsi, un organe de rappel de faible puissance suffit à repousser uniquement la tige de clapet et le clapet auxiliaire contre le siège de clapet. En outre, grâce au jeu entre l'épaulement et le rebord annulaire, le début de course de déplacement en ouverture de l'électrovanne nécessite seulement une force apte à déplacer le corps du noyau, sans devoir également s'opposer au ressort et à la pression du fluide sur le clapet auxiliaire.

Grâce à toutes ces caractéristiques et plus particulièrement à la position de l'aimant permanent assurant un bouclage magnétique performant, une impulsion de faible intensité et d'une faible durée permet d'ouvrir et de fermer l'électrovanne (en fonction du sens du courant). Ceci génère donc une économie d'énergie électrique non négligeable même en cas de forte pression de fluide.

Selon un mode de réalisation, l'électrovanne comporte une douille, l'électroaimant étant logé dans une portion supérieure de ladite douille, la portion inférieure de ladite douille formant l'entrée de fluide de l'électrovanne, la douille comprenant dans sa partie interne un siège principal prolongé par une chambre de temporisation, un ou plusieurs canaux longitudinaux étant disposés entre le siège principal et la paroi externe de la douille pour permettre le passage du fluide depuis l'arrivée de fluide vers la chambre de temporisation.

Selon un mode de réalisation, la douille comporte un ou plusieurs canaux radiaux disposés en dessous du siège principal pour permettre le passage du fluide entre la chambre de temporisation et une chambre tubulaire d'évacuation du fluide qui est située entre une enveloppe tubulaire et la douille, la partie supérieure interne de la douille comportant un évasement dont le fond inférieur reçoit une cloison rapportée qui constitue le plafond de la chambre de temporisation, la dite cloison rapportée se prolongeant dans la chambre de temporisation par un tube de purge sur lequel coulisse un piston monobloc dont la collerette extérieure fait office de joint à lèvre, un ressort étant disposé entre la face inférieure de la cloison rapportée et la face supérieure du piston monobloc, la face inférieure du dit piston monobloc faisant office de clapet principal et reposant sur le siège principal lorsque l'électrovanne est en position fermée, une ou des stries verticales étant ménagées à la périphérie de la chambre de temporisation, les dites stries coopérant avec la collerette extérieure en forme de joint à lèvre du piston pour contrôler la vitesse de fermeture du piston.

Selon un mode de réalisation, la cloison rapportée comporte en partie supérieure un alésage dont le fond porte axialement un siège auxiliaire qui reçoit le clapet auxiliaire et communique avec l'intérieur du tube de purge, une ou plusieurs lumières étant aménagées radialement dans le fond de l'alésage, de part et d'autre du siège auxiliaire, ces lumières débouchant dans la chambre de temporisation, le tube de purge débouchant sous le siège dans le ou les canaux radiaux et communiquant ainsi avec la chambre tubulaire d'évacuation.

Lorsque le noyau est en position basse, le clapet auxiliaire repose sur le siège auxiliaire ce qui a pour effet d'obstruer la communication entre le canal de décharge et la chambre haute et, lorsque le noyau est en position haute, le clapet auxiliaire libère l'ouverture du siège auxiliaire ce qui met en communication la chambre haute et le canal de décharge dont l'extrémité inférieure débouche sous le siège principal.

De cette manière, lorsque la bobine est activée pour ouvrir le clapet auxiliaire, le fluide contenu dans la chambre de temporisation pouvant alors s'écouler par le tube de purge, le piston est poussé vers le haut par la pression du réseau et, lorsque la bobine est activée pour fermer le clapet auxiliaire, le piston redescend vers le siège principal sous la poussée du ressort placé entre la face supérieure du dit piston et la cloison rapportée.

### Brève description des figures

L'invention sera mieux comprise, et d'autres buts, détails, caractéristiques et avantages de celle-ci apparaîtront plus clairement au cours de la description suivante d'un mode de réalisation particulier de la présente invention, donné uniquement à titre illustratif et non limitatif, en référence aux dessins annexés.
- la figure 1 est une vue en perspective d'une électrovanne selon la présente invention ;
- la figure 2 est une vue selon une première coupe verticale de l'électrovanne selon la figure 1 en position fermée ;
- la figure 3 est une vue selon une deuxième coupe verticale distincte de la première coupe de l'électrovanne de la figure 1 en position ouverte ;
- la figure 4 est une vue en perspective d'une portion interne de l'électrovanne de la figure 1 dans laquelle sont représentés les éléments du système de commande de l'électrovanne; et,
- la figure 5 est une vue partielle éclatée de la figure 4.

### Description détaillée de modes de réalisation

Dans la description et les revendications, on utilisera les termes "supérieur" et "inférieur" pour définir la position relative d'un élément par rapport à un autre selon une direction axiale le long de laquelle se déplace le noyau de l'électrovanne, un élément destiné à être placé proche de la sortie de fluide de l'électrovanne étant désigné par supérieur et un élément destiné à être placé proche de l'entrée de fluide de l'électrovanne étant désigné par inférieur.

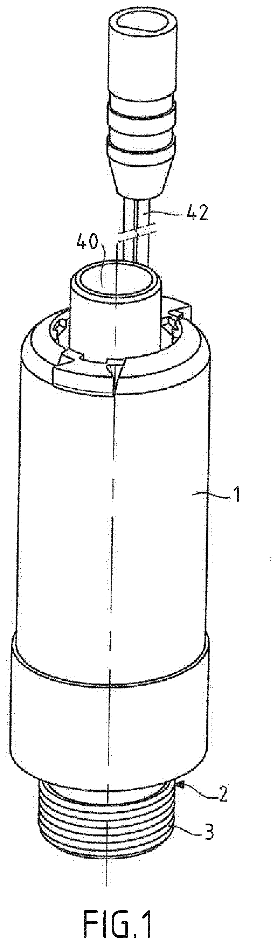

En regard de la figure 1 est illustrée une électrovanne comprenant une enveloppe tubulaire 1 qui contient une douille 2 dont la partie inférieure 3 est l'entrée de fluide dans l'électrovanne. Cette partie inférieure comporte un moyen de raccordement à une conduite de fluide. Ce moyen de raccordement peut être réalisé de nombreuses manières telles que par exemple, comme illustré sur la figure 1, par filetage,

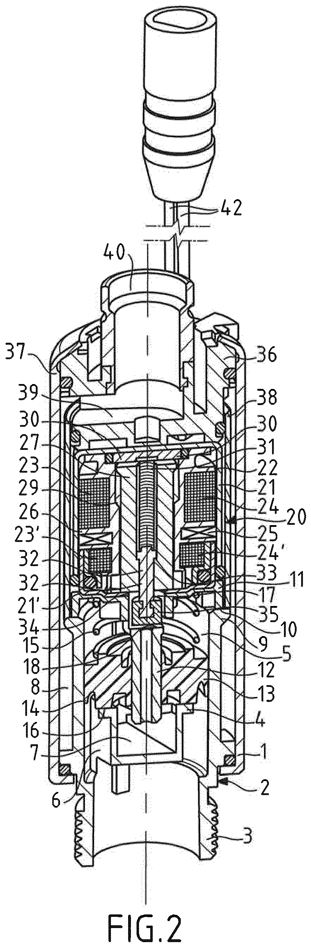

Comme illustré sur la figure 2, cette douille 2 porte dans sa partie interne un siège principal 4, prolongé par une chambre de temporisation 5. Un ou plusieurs canaux longitudinaux 6 sont disposés entre le siège principal 4 et la paroi externe de la douille 2 pour permettre le passage du fluide depuis la partie inférieure 3 vers la chambre de temporisation 5. Un ou plusieurs canaux radiaux 7 sont disposés en dessous du siège principal 4 pour permettre le passage du fluide entre la chambre de temporisation 5 et une chambre tubulaire 8 d'évacuation de fluide qui est située entre l'enveloppe tubulaire 1 et la douille 2, le fluide se trouvant ainsi dirigé vers la partie supérieure de l'électrovanne.

La partie supérieure interne de la douille 2 comporte un évasement 9 dont le fond inférieur 10 reçoit une cloison rapportée 11, qui constitue le plafond de la chambre de temporisation 5. Cette cloison rapportée 11 se prolonge dans la chambre de temporisation 5 par un tube 12 sur lequel coulisse un piston monobloc 13, par exemple en élastomère, dont la collerette extérieure 14 fait office de joint à lèvre et coopère avec la paroi de la chambre de temporisation qui comporte une ou plusieurs stries coopérant avec la collerette extérieure du piston pour contrôler la vitesse de fermeture du piston. Un ressort 15 est disposé entre la face inférieure de la cloison rapportée 11 et la face supérieure du piston monobloc 13. La face inférieure 16 du piston monobloc 13 fait office de clapet principal et repose sur le siège principal 4 lorsque l'électrovanne est en position fermée, comme représenté à la figure 2.

La cloison rapportée 11 comporte en partie supérieure un alésage 17 dont le fond porte axialement un siège auxiliaire 18 qui communique avec l'intérieur du tube 12. Une ou des lumières sont ménagées radialement dans le fond de l'alésage 17, de part et d'autre du siège auxiliaire 18, ces lumières débouchant dans la chambre de temporisation 5. Ces lumières mettent en communication la chambre de temporisation 5 et l'intérieur du tube 12 lorsque le clapet auxiliaire 35 est distant du siège auxiliaire 18. Par ailleurs, le tube 12 débouche sous le siège principal dans l'un des canaux radiaux 7 et communique donc, via le ou les canaux radiaux 7, avec la chambre tubulaire d'évacuation 8.

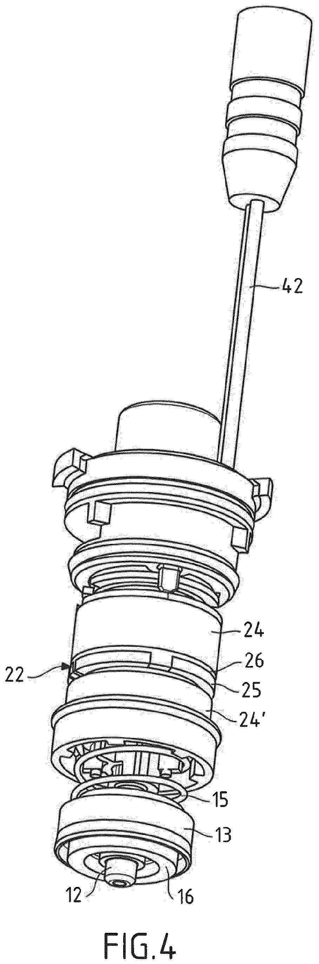

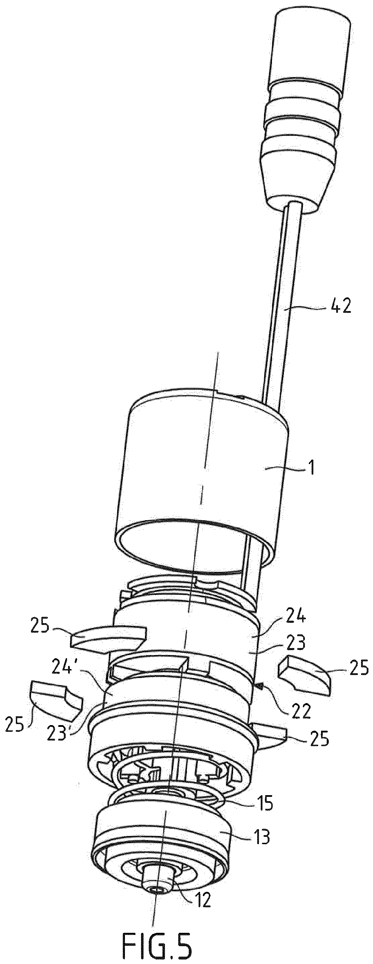

La cloison rapportée 11 reçoit sur sa face supérieure 20 un électro-aimant dont la carcasse, en deux parties emboîtées 21, 21' en tôle emboutie, contient un moyeu 22 à double étage 23 et 23' sur lesquels sont enroulées deux bobinages en série, un bobinage supérieur 24 et un bobinage inférieur 24'. Un aimant permanent annulaire 25 est disposé sous une cloison médiane 26 du moyeu 22 et donc entre les deux bobinages 24 et 24'. Cette disposition de l'aimant permanent 25 entre les bobinages supérieur 24 et inférieur 24' permet de créer deux flux magnétiques équilibrés, l'un montant, l'autre descendant, bouclant via les deux parties emboîtées 21 et 21' de la carcasse. Par ailleurs, le moyeu 22 comporte un alésage central dans lequel est monté coulissant un noyau 27. Ce noyau 27 est réalisé dans un matériau perméable aux flux magnétiques de sorte que les deux flux magnétiques générés par l'aimant annulaire permanent puissent actionner le noyau 27, comme expliqué ci-après. La disposition de l'aimant permanent 25 entre les bobinages supérieur 24 et inférieur 24' permet avantageusement de réduire l'espace séparant le noyau 27 de l'aimant permanent 25, augmentant ainsi les performances des flux générés par l'aimant permanent annulaire 25 sur le noyau 27. Cet aimant permanent 25 est polarisé selon une direction orthogonale à l'axe du noyau , il peut être réalisé en deux, trois ou quatre éléments en forme de croissant et disposés autour du moyeu 22. Ainsi, dans l'exemple illustré sur les figures 4 et 5, l'aimant permanent 25 est constitué de quatre portions en quart de cercle réparties autour du moyeu 22, la périphérie de cet aimant permanent 25 étant en contact avec le cylindre extérieur de la carcasse 21 dans laquelle est logé le moyeu 22, le rayon intérieur dudit aimant permanent 25 est ainsi au plus près du noyau 27.

Un évasement 29 est ménagé dans la partie supérieure du moyeu 22 pour recevoir une collerette sommitale 28 du noyau 27. Un bouchon circulaire d'étanchéité 30 est inséré au sommet de cet évasement 29 pour assurer l'étanchéité au sommet du bobinage supérieur 24 au moyen d'un joint d'étanchéité circulaire intercalé de façon étanche entre ledit bouchon d'étanchéité 30 et le moyeu 22, la partie supérieure 21 de la carcasse assurant l'immobilisation de ce bouchon circulaire 30. L'intérieur du noyau 27 est percé d'un alésage 31 contenant un plongeur 32, ledit plongeur 32 comportant un rebord annulaire logé dans l'alésage 31 et limitant la course dudit plongeur dans l'alésage 31 par coopération avec un épaulement 33 dudit alésage 31.

A la partie inférieure 21' de la carcasse, un trou axial 34 permet le passage du plongeur 32 dont la partie inférieure reçoit un clapet auxiliaire 35, par exemple en élastomère, qui, lorsque l'électrovanne est en position fermée, vient fermer le siège auxiliaire 18 comme illustré sur la figure 2.

Afin de faire passer l'électrovanne depuis sa position fermée à sa position ouverte, les bobinages supérieurs 24 et inférieur 24' sont alimentés pour générer un flux magnétique montant. Ce flux magnétique généré par les bobinages supérieur 24 et inférieur 24' doit s'opposer au flux magnétique descendant généré par l'aimant permanent 25, maintenant le noyau 27 en position basse, de manière à déplacer le noyau 27 en direction de sa position haute. Plus particulièrement, du fait du positionnement de l'aimant permanent 25 entre le bobinage supérieur 24 et le bobinage inférieur 24' dans une position sensiblement centrale du moyeu 22, le flux magnétique généré par les bobinages supérieur 24 et inférieur 24' s'oppose au flux magnétique descendant généré par l'aimant permanent 25 et renforce le flux magnétique montant généré par l'aimant permanent 25.

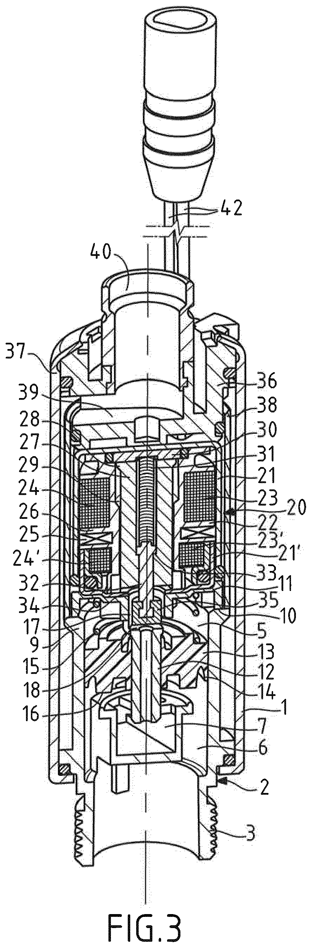

Ainsi, lorsqu'une impulsion de courant est envoyée dans le double bobinage 24, 24' de l'électrovanne en position fermée telle qu'illustrée sur la figure 2, le noyau 27 remonte au contact du bouchon circulaire 30 sous l'effet du flux magnétique généré par le double bobinage 24, 24'. La remontée du noyau 27 entraîne la remontée du plongeur 32 par coopération d'un rebord annulaire du plongeur avec l'épaulement 33 de l'alésage 31. Comme illustré sur la figure 3, cette remontée du plongeur 32 décolle le clapet auxiliaire 35 du siège auxiliaire 18, ce qui met en communication l'alésage 17 et le tube 12. Cette communication de l'alésage 17 et du tube 12 met également en communication le tube 12 et la chambre de temporisation 5 via les lumières ménagées entre l'alésage 17 et la chambre 5. Le fluide contenu dans la chambre de temporisation 5 au-dessus du piston monobloc 13 peut alors être évacué via le tube 12 et la pression du fluide contenu dans la chambre de temporisation 5 chute. Dès lors, le piston monobloc 13 remonte sous la pression du fluide arrivant par le ou les canaux longitudinaux 6, ce qui décolle la face inférieure 16 du piston monobloc 13 du siège principal 4, mettant ainsi en communication le fluide du réseau arrivant via les canaux longitudinaux 6 et la chambre tubulaire d'évacuation 8 via les canaux radiaux 7, c'est-à-dire déclenche l'ouverture de l'électrovanne.

De préférence, un jeu sépare le rebord annulaire du plongeur avec l'épaulement 33 de l'alésage 31 en position fermée de l'électrovanne. Ainsi, le flux nécessaire au déplacement du noyau 27 en début de course en ouverture de l'électrovanne ne nécessite que la seule force nécessaire au déplacement dudit noyau 27 à rencontre du flux magnétique généré par l'aimant 25, sans avoir à s'opposer aux forces liées à la pression du fluide sur le clapet auxiliaire 35 et au ressort 15.

Afin de faire passer l'électrovanne depuis sa position ouverte à sa position fermée, les bobinages supérieurs 24 et inférieur 24' sont alimentés dans le sens inverse afin de générer un flux magnétique descendant. Ce flux magnétique généré par les bobinages supérieur 24 et inférieur 24' doit s'opposer au flux magnétique montant généré par l'aimant permanent 25 et maintenant le noyau 27 en position haute de manière à déplacer le noyau 27 en direction de sa position basse. Plus particulièrement, le flux magnétique généré par les bobinages supérieur 24 et inférieur 24' s'oppose au flux magnétique montant généré par l'aimant permanent 25 et s'additionne au flux magnétique descendant généré par l'aimant permanent 25:

Ainsi, lors de l'envoi d'une impulsion de courant correspondante dans le double bobinage, le noyau 27 redescend en position basse, jusqu'à toucher un fond de la carcasse inférieure 21, permettant ainsi au clapet auxiliaire 35 de refermer le siège auxiliaire 18. Le piston monobloc 13 peut alors, sous la poussée du ressort 15, redescendre vers le siège principal 4.

Lorsque le noyau 27 est en position haute et que les bobinages supérieur 24 et inférieur 24' ne sont pas alimentés, le noyau 27 est maintenu en position haute contre le bouchon d'étanchéité 30 par le flux magnétique montant de l'aimant permanent annulaire 25 qui est alors de valeur plus élevée que son flux magnétique descendant du fait de la position du noyau 27 permettant au flux magnétique montant de reboucler facilement par le contact du noyau 27 avec le bouchon d'étanchéité 30, et le haut de la carcasse. Dans cette position haute du noyau 27, le plongeur 32 est également maintenu dans une position haute dans laquelle le clapet 35 est éloigné du siège de clapet auxiliaire 18 par l'épaulement 33 de l'alésage 31 coopérant avec le rebord annulaire du plongeur 32. Autrement dit, l'électrovanne est maintenue dans une position ouverte telle qu'illustrée sur la figure 3 par le maintien du noyau 27 en position haute par l'aimant permanent 25.

A l'inverse, lorsque le noyau 27 est en position basse et que les bobinages supérieur 24 et inférieur 24' ne sont pas alimentés, le noyau 27 est maintenu en position basse contre le fond de la partie inférieure 21' de la carcasse par le flux magnétique descendant généré par l'aimant permanent annulaire 25 qui est alors de valeur plus élevée que son flux magnétique montant du fait que le noyau 27 est en contact avec la partie inférieure de la carcasse. Dans cette position basse du noyau 27, un jeu vertical est ménagé entre le rebord annulaire du plongeur et l'épaulement 33 de l'alésage 31 du noyau 27, de cette manière la tige de clapet 32 est maintenue dans une position basse par la seule poussée d'un ressort à laquelle s'ajoute la pression de fluide du réseau.

Le noyau 27 étant maintenu en position par l'aimant permanent 25, ce ressort ne doit générer un effort que sur le seul plongeur 32 afin de garantir l'appui du clapet auxiliaire 35 contre le siège de clapet auxiliaire 18. Autrement dit, l'électrovanne est maintenue dans une position fermée telle qu'illustrée sur la figure 2 par le maintien du noyau 27 en position basse par l'aimant permanent 25 et par le maintien du clapet auxiliaire 35 contre le siège de clapet auxiliaire 18 par le ressort logé dans l'alésage 31.

L'aimant permanent annulaire est ici représenté en plusieurs secteurs mais pourrait tout aussi bien être réalisé d'un seul bloc.

Selon le présent mode de réalisation, un premier bouchon creux 36 est inséré à la partie sommitale 37 de l'enveloppe tubulaire 1. La partie inférieure de ce premier bouchon creux 36 vient s'insérer dans la partie sommitale 38 de la douille 2. Sous l'effet d'une poussée verticale en partie sommitale sur ce premier bouchon creux 36, celui-ci vient en appui sur la partie sommitale de la carcasse 21. De préférence, la poussée verticale en partie sommitale sur ce premier bouchon creux 36 peut être réalisée par un sertissage de la partie sommitale de l'enveloppe tubulaire 1, ou par tout autre moyen tel qu'un écrou vissé dans l'enveloppe tubulaire.

Le premier bouchon creux 36 comporte un ou des canaux radiaux 39 pour permettre, lorsque l'électrovanne est en position ouverte comme illustré sur la figure 3, le passage du fluide depuis la chambre tubulaire 8 vers un canal de sortie 40 ménagé au sommet de ce premier bouchon creux 36. Un canal vertical périphérique (non illustré) est ménagé dans le moyeu 22, dans la carcasse 21 et dans le premier bouchon creux 36 pour permettre le passage du fil d'alimentation 42 de la bobine.

De façon évidente pour l'homme de l'art, des joints sont disposés aux endroits nécessaires pour assurer l'étanchéité de cet assemblage.

Bien que l'invention ait été décrite en liaison avec un mode de réalisation particulier, il est évident qu'elle n'y est nullement limitée et qu'elle comprend tous les équivalents techniques des moyens décrits ainsi que leurs combinaisons si celles-ci entrent dans le cadre de la présente invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Electrovanne pour fluide du type bistable avec un clapet principal ainsi qu'un clapet auxiliaire (35) actionné par un noyau (27, 32) d'un électroaimant, ladite électrovanne présentant un axe longitudinal, une entrée de fluide, une sortie de fluide et l'électroaimant commandant le clapet auxiliaire étant alignés selon l'axe longitudinal de l'électrovanne, le noyau (27) présentant un alésage (31) et une tige de clapet (32) étant logée dans ledit alésage (31), la tige de clapet (32) portant à son extrémité inférieure le clapet auxiliaire (35),ladite tige de clapet présentant à son extrémité supérieure un rebord annulaire logé dans l'alésage (31) du noyau (27), ledit alésage (31) présentant un épaulement (33) en regard du rebord annulaire de la tige de clapet (32), ledit épaulement (33) étant configuré pour que le noyau puisse entraîner verticalement la tige de clapet (32) en déplacement lors d'une commande d'ouverture de l'électrovanne, un organe de rappel étant logé dans l'alésage (31) pour repousser la tige de clapet (32) lors d'une commande de fermeture de l'électrovanne, l'électroaimant comportant un moyeu (22) avec des cloisons radiales délimitant des logements pour un bobinage supérieur (24), un bobinage inférieur (24') et un ou des aimants permanents (25) en forme de croissant, chaque aimant permanent (25) étant intercalé entre les deux bobinages (24, 24') dans des alvéoles d'une cloison centrale du moyeu, ledit aimant permanent étant disposé perpendiculairement à l'axe du noyau (27) coulissant dans un alésage central du moyeu (22), de manière à ce que la périphérie de cet aimant permanent (25) soit en contact avec une paroi intérieure d'une carcasse en deux parties emboîtée (21, 21') en tôle emboutie dans laquelle est logé le moyeu (22) et de manière à ce qu'un rayon intérieur dudit aimant soit au plus près du noyau (27), ledit aimant permanent (25) étant composé d'un ou plusieurs secteurs magnétisés radialement par rapport à l'axe du noyau (27) afin de générer deux flux magnétiques équilibrés, un premier flux magnétique montant et un deuxième flux magnétique descendant, **caractérisée par le fait qu'**un jeu sépare le rebord annulaire de l'épaulement (33) lorsque l'électrovanne est en position fermée.

2. Electrovanne selon la revendication 1, **caractérisée en ce que** l'aimant permanent (25) comporte des pôles agencés radialement par rapport au noyau de manière à ce que, d'une part, le premier flux magnétique soit apte à maintenir le noyau (27) dans une position correspondant à une position ouverte du clapet auxiliaire (35) et dans laquelle le premier flux magnétique reboucle par contact du noyau (27) avec un bouchon circulaire (30) et la partie supérieure (21) de la carcasse et, d'autre part, que le deuxième flux magnétique soit apte à maintenir le noyau (27) dans une position correspondant à une position fermée du clapet auxiliaire (35) et dans laquelle le deuxième flux magnétique reboucle par contact du noyau (27) avec la partie inférieure (21') de la carcasse, lorsque l'alimentation des bobinages supérieur et inférieur est coupée, un évasement (29) étant ménagé dans la partie supérieure du moyeu (22) pour recevoir une collerette sommitale (28) du noyau (27) et un bouchon circulaire (30) qui est rendu immobile par contact avec la partie supérieure (21) de la carcasse, la partie inférieure (21') de la carcasse étant percée d'un trou axial pour permettre le passage de la tige de clapet (32) dont la partie inférieure reçoit le clapet auxiliaire.

3. Electrovanne selon l'une des revendications 1 et 2, **caractérisée en ce qu'**elle comporte une douille (2), l'électroaimant étant logé dans une portion supérieure de ladite douille (2), une partie inférieure (3) de ladite douille formant l'entrée de fluide de l'électrovanne, la douille (2) comprenant dans sa partie interne un siège principal (4) prolongé par une chambre de temporisation (5), un ou plusieurs canaux longitudinaux (6) étant disposés entre le siège principal (4) et une paroi externe de la douille (2) pour permettre le passage du fluide depuis l'arrivée de fluide vers la chambre de temporisation (5).

4. Electrovanne selon revendication 3 **caractérisée en ce que** la douille (2) comporte un ou plusieurs canaux radiaux (7) disposés en dessous du siège principal (4) pour permettre le passage du fluide entre la chambre de temporisation (5) et une chambre tubulaire (8) d'évacuation du fluide qui est située entre une enveloppe tubulaire (1) et la douille (2), la partie supérieure interne de la douille (2) comportant un évasement (9) dont un fond inférieur (10) reçoit une cloison rapportée (11) qui constitue un plafond de la chambre de temporisation (5), la dite cloison rapportée (11) se prolongeant dans la chambre de temporisation (5) par un tube (12) de purge sur lequel coulisse un piston monobloc (13) dont une collerette extérieure fait office de joint à lèvre qui coopère avec une ou des stries verticales ménagées à la périphérie de la chambre de temporisation pour contrôler la vitesse de fermeture de l'électrovanne, un ressort étant disposé entre la face inférieure de la cloison rapportée (11) et la face supérieure du piston monobloc (13), la face inférieure (16) du dit piston monobloc faisant office de clapet principal et reposant sur le siège principal (4) lorsque l'électrovanne est en position fermée.

5. Electrovanne selon la revendication 4, **caractérisée en ce que** la cloison rapportée (11) comporte en partie supérieure un alésage (17) dont le fond porte axialement un siège auxiliaire (18) qui reçoit le clapet auxiliaire (35) et communique avec l'intérieur du tube (12) de purge, une ou plusieurs lumières étant aménagées radialement dans le fond de l'alésage (17) , de part et d'autre du siège auxiliaire (18), ces lumières débouchant dans la chambre de temporisation (5) le tube (12) de purge débouchant sous le siège dans le ou les canaux radiaux (7) et communiquant ainsi avec la chambre tubulaire d'évacuation (8).

## Patentansprüche

1. Bistabiles Elektromagnetventil für Fluid mit einem Hauptverschluss sowie einem Hilfsverschluss (35), der von einem Kern (27, 32) eines Elektromagneten betätigt wird, wobei das Elektromagnetventil eine Längsachse aufweist, wobei ein Fluideinlass, ein Fluidauslass und der Elektromagnet, der den Hilfsverschluss steuert, gemäß der Längsachse des Elektromagnetventils ausgerichtet sind, wobei der Kern (27) eine Bohrung (31) und eine Verschlussstange (32) aufweist, die in der Bohrung (31) aufgenommen ist, wobei die Verschlussstange (32) an ihrem unteren Ende den Hilfsverschluss (35) trägt, wobei die Verschlussstange an ihrem oberen Ende eine ringförmige Kante aufweist, die in der Bohrung (31) des Kerns (27) aufgenommen ist, wobei die Bohrung (31) einen Absatz (33) gegenüber der ringförmigen Kante der Verschlussstange (32) aufweist, wobei der Absatz (33) ausgelegt ist, damit, bei einem Öffnungsbefehl des Elektromagnetventils, der Kern die Verschlussstange (32) vertikal verlagernd antreiben kann, wobei eine Rückstelleinrichtung in der Bohrung (31) aufgenommen ist, um die Verschlussstange (32) bei einem Schließbefehl des Elektromagnetventils zurückzudrücken, wobei der Elektromagnet eine Nabe (22) mit radialen Trennwänden aufweist, die Aufnahmen für eine obere Wicklung (24), eine untere Wicklung (24') und einen sichelförmigen oder sichelförmige Dauermagneten (25) begrenzen, wobei jeder Dauermagnet (25) zwischen den zwei Wicklungen (24, 24') in Fächern einer zentralen Trennwand der Nabe zwischengestellt ist, wobei der Dauermagnet senkrecht zur Achse des Kerns (27) in einer zentralen Bohrung der Nabe (22) gleitend angeordnet ist, so dass der Umfang dieses Dauermagneten (25) mit einer Innenwand einer Karkasse aus zwei verrasteten Teilen (21, 21') aus gezogenem Blech in Kontakt ist, in der die Nabe (22) aufgenommen ist, und derart, dass ein Innenradius des Magneten so nah wie möglich am Kern (27) ist, wobei der Dauermagnet (25) aus einem oder mehreren magnetisierten Sektoren radial in Bezug auf die Achse des Kerns (27) zusammengesetzt ist, um zwei ausgeglichene Magnetströme zu erzeugen, einen aufsteigenden ersten Magnetstrom und einen zweiten absteigenden Magnetstrom, **dadurch gekennzeichnet, dass** ein Spiel die ringförmige Kante von dem Absatz (33) trennt, wenn das Elektromagnetventil in geschlossener Position ist.

2. Elektromagnetventil nach Anspruch 1, **dadurch gekennzeichnet, dass** der Dauermagnet (25) Pole aufweist, die in Bezug auf den Kern radial eingerichtet sind, so dass zum einen der erste Magnetstrom imstande ist, den Kern (27) in einer Position zu halten, die einer geöffneten Position des Hilfsverschlusses (35) entspricht und in welcher der erste Magnetstrom durch Kontakt des Kerns (27) mit einem kreisförmigen Stopfen (30) und dem oberen Teil (21) der Karkasse zurückschleift und zum anderen, dass der zweite Magnetstrom imstande ist, den Kern (27) in einer Position zu halten, die einer geschlossenen Position des Hilfsverschlusses (35) entspricht und in welcher der zweite Magnetstrom durch Kontakt des Kerns (27) mit dem unteren Teil (21') der Karkasse zurückschleift, wenn die Versorgung der oberen und unteren Wicklung unterbrochen ist, wobei eine Erweiterung (29) im oberen Teil der Nabe (22) ausgebildet ist, um einen Scheitelflansch (28) des Kerns (27) und einen kreisförmigen Stopfen (30) aufzunehmen, der durch Kontakt mit dem oberen Teil (21) der Karkasse arretiert ist, wobei der untere Teil (21') der Karkasse von einem axialen Loch durchbrochen ist, um den Durchgang der Verschlussstange (32) zu erlauben, deren unterer Teil den Hilfsverschluss aufnimmt.

3. Elektromagnetventil nach einem der Ansprüche 1 und 2, **dadurch gekennzeichnet, dass** es eine Hülse (2) aufweist, wobei der Elektromagnet in einem oberen Abschnitt der Hülse (2) aufgenommen ist, wobei ein unterer Teil (3) der Hülse den Fluideinlass des Elektromagnetventils bildet, wobei die Hülse (2) in ihrem inneren Teil einen Hauptsitz (4) umfasst, der von einer Verzögerungskammer (5) verlängert wird, wobei ein oder mehrere Längskanäle (6) zwischen dem Hauptsitz (4) und einer Außenwand der Hülse (2) angeordnet sind, um den Durchgang des Fluids ab der Fluidankunft zu der Verzögerungskammer (5) erlauben.

4. Elektromagnetventil nach Anspruch 3, **dadurch gekennzeichnet, dass** die Hülse (2) einen oder mehrere radiale Kanäle (7) aufweist, die unterhalb des Hauptsitzes (4) angeordnet sind, um den Durchgang des Fluids zwischen der Verzögerungskammer (5) und einer rohrförmigen Kammer (8) für die Ableitung des Fluids zu erlauben, die sich zwischen einem rohrförmigen Mantel (1) und der Hülse (2) befindet, wobei der innere obere Teil der Hülse (2) eine Erweiterung (9) aufweist, von der ein unterer Boden (10) eine angesetzte Trennwand (11) empfängt, die eine Decke der Verzögerungskammer (5) darstellt, wobei sich die angesetzte Trennwand (11) in der Verzögerungskammer (5) mittels eines Ablassrohrs (12) verlängert, auf dem ein einteiliger Kolben (13) gleitet, von dem ein äußerer Flansch als Lippendichtung dient, die mit einer oder vertikalen Rille(n) zusammenwirkt, die in den Umfang der Verzögerungskammer eingearbeitet sind, um die Schließgeschwindigkeit des Elektromagnetventils zu steuern, wobei eine Feder zwischen der unteren Fläche der angesetzten Trennwand (11) und der oberen Fläche des einteiligen Kolbens (13) angeordnet ist, wobei die obere Fläche (16) des einteiligen Kolbens als Hauptverschluss dient und auf dem Hauptsitz (4) aufliegt, wenn das Elektromagnetventil in geschlossener Position ist.

5. Elektromagnetventil nach Anspruch 4, **dadurch gekennzeichnet, dass** die angesetzte Trennwand (11) im oberen Teil eine Bohrung (17) aufweist, deren Boden axial einen Hilfssitz (18) trägt, der den Hilfsverschluss (35) empfängt und mit dem Inneren des Ablassrohrs (12) kommuniziert, wobei eine oder mehrere Öffnungen im Boden der Bohrung (17) radial beiderseits des Hilfssitzes (18) eingerichtet sind, wobei diese Öffnungen in die Verzögerungskammer (5) ausmünden, wobei das Ablassrohr (12) unter dem Sitz in den oder die radialen Kanäle (7) ausmündet und somit mit der rohrförmigen Ableitungskammer (8) kommuniziert.

## Claims

1. A bistable-type solenoid valve for fluid with a main obturator as well as an auxiliary obturator (35) actuated by a core (27, 32) of an electromagnet, said solenoid valve having a longitudinal axis, a fluid inlet, a fluid outlet and the electromagnet controlling the auxiliary obturator being aligned along the longitudinal axis of the solenoid valve, the core (27) having a bore (31) and a obturator stem (32) being housed in said bore (31), the obturator stem (32) bearing, at its lower end, the auxiliary obturator (35), said obturator stem having, at its upper end, an annular rim housed in the bore (31) of the core (27), said bore (31) having a shoulder (33) opposite the annular rim of the obturator stem (32), said shoulder (33) being configured so that the core can drive vertically the movement of the obturator stem (32) during an opening command of the solenoid valve, a return member being housed in the bore (31) to push the obturator stem (32) back during a closing command of the solenoid valve, the solenoid valve including a hub (22) with radial partitions delimiting housings for an upper winding (24), a lower winding (24') and one or several permanent magnets (25) with a crescent shape, each permanent magnet (25) being inserted between the two windings (24, 24') in cells of a central partition of the hub, said permanent magnet being arranged perpendicularly to the axis of the core (27) sliding in a central bore of the hub (22), such that the periphery of this permanent magnet (25) is in contact with an inner wall of a carcass with two nested parts (21, 21') made from stamped sheet metal in which the hub (22) is housed and such that an inner radius of said magnet is as close as possible to the core (27), said permanent magnet (25) being made up of one or several sectors that are radially magnetized relative to the axis of the core (27) in order to generate two balanced magnetic fluxes, a first rising magnetic flux and a second descending magnetic flux, **characterized in that** a clearance separates the annular rim of the shoulder (33) when the solenoid valve is in the closed position.

2. The solenoid valve according to claim 1, **characterized in that** the permanent magnet (25) includes poles arranged radially relative to the core such that on the one hand, the first magnetic flux is able to keep the core (27) in a position corresponding to an open position of the auxiliary obturator (35) and in which the first magnetic flux loops back by contact of the core (27) with a circular plug (30) and the upper part (21) of the carcass and, on the other hand, the second magnetic flux is able to keep the core (27) in a position corresponding to a closed position of the auxiliary obturator (35) and in which the second magnetic flux loops back by contact of the core (27) with the lower part (21') of the carcass, when the supply of the upper and lower windings is cut off, a flare (29) being provided in the upper part of the hub (22) to receive an uppermost collar (28) of the core (27) and a circular plug (30) that is made immobile by contact with the upper part (21) of the carcass, the lower part (21') of the carcass being pierced with an axial hole to allow the passage of the obturator stem (32) whose lower part receives the auxiliary obturator.

3. The solenoid valve according to one of claims 1 to 2, **characterized in that** it includes a bushing (2), the electromagnet being housed in an upper portion of said bushing (2), a lower portion (3) of said bushing forming the fluid inlet of the solenoid valve, the bushing (2) comprising, in its inner part, a main seat (4) extended by a retard chamber (5), one or several longitudinal channels (6) being arranged between the main seat (4) and an outer wall of the bushing (2) to allow the passage of the fluid from the fluid intake toward the retard chamber (5).

4. The solenoid valve according to claim 3, **characterized in that** the bushing (2) includes one or several radial channels (7) arranged below the main seat (4) to allow the passage of the fluid between the retard chamber (5) and a tubular chamber (8) for discharging the fluid that is located between a tubular enclosure (1) and the bushing (2), the inner upper part of the bushing (2) including a flare (9), a lower bottom (10) of which receives an inserted partition (11) that makes up a ceiling of the retard chamber (5), said inserted partition (11) extending in the retard chamber (5) by a drain tube (12) on which a monobloc piston (13) slides, an outer collar of which serves as lip seal that cooperates with one or several vertical grooves arranged at the periphery of the retard chamber to control the closing speed of the solenoid valve, a spring being arranged between the lower face of the inserted partition (11) and the upper face of the monobloc piston (13), the lower face (16) of said monobloc piston serving as main obturator and resting on the main seat (4) when the solenoid valve is in the closed position.

5. The solenoid valve according to claim 4, **characterized in that** the inserted partition (11) includes, in the upper part, a bore (17) whose bottom axially bears an auxiliary seat (18) that receives the auxiliary obturator (35) and communicates with the inside of the drain tube (12), one or several lumens being provided radially in the bottom of the bore (17), on either side of the auxiliary seat (18), these lumens opening in the retard chamber (5), the drain tube (12) opening below the seat in the one or several radial channels (7) and thus communicating with the tubular discharge chamber (8).
